# EUROPÄISCHE PATENTSCHRIFT

(11) **EP 1 274 058 B1**
(45) Veröffentlichungstag und Bekanntmachung des Hinweises auf die Patenterteilung: **17.12.2003**
(21) Anmeldenummer: 01440205.1
(22) Anmeldetag: 05.07.2001
(51) Int. Cl.: G08G 1/0968

(54) **Navigationsverfahren und Navigationssystem**
Navigation method and navigation system
Procédé de navigation et système de navigation

(43) Veröffentlichungstag der Anmeldung: 08.01.2003
(73) Patentinhaber: ALCATEL, 75008 Paris (FR)
(72) Erfinder: Hägebarth, Frank, 74366 Kirchheim (DE)
(74) Vertreter: Rausch, Gabriele, Dr.

(56) Entgegenhaltungen:
- EP-A- 0 715 289
- EP-A- 1 069 545
- WO-A-92/14215
- DE-A- 19 747 230
- DE-C- 4 429 121
- US-A- 5 933 100

## Beschreibung

Die Erfindung betrifft ein Verfahren zum Navigieren mit Hilfe eines benutzerseitigen Navigationsendgeräts, insbesondere von Fahrzeugen, in denen ein solches Navigationsendgerät angeordnet ist, und ein Navigationssystem.

Bekannte Navigationssysteme in Fahrzeugen beinhalten die Daten des Verkehrsnetzes eines bestimmten Gebiets. Diese sind meist auf auswechselbaren Datenträgern (z.B. CD-ROM, DVD) gespeichert. Üblicherweise besitzen sie einen GPS-Empfänger zur Standortbestimmung. Ein ähnliches Navigationssystem ist beispielsweise aus der EP 0 715 289 A2 bekannt.

Der Benutzer gibt am Gerät das Ziel der Reise ein. Das System ermittelt aus den gespeicherten Daten des Streckennetzes den optimalen Streckenverlauf und leitet den Benutzer bzw. Fahrer über visuelle Anzeigen und akustische Ansagen zum Reiseziel.

In die Wegeführung fließt bei modernen Systemen die aktuelle Verkehrssituation mit ein. Dazu wurden und werden mit großem Aufwand Sensoren zur Überwachung des Verkehrsflusses an Straßen und Verkehrsknotenpunkten angebracht.

Weiterhin gibt es Verfahren, bei denen die Fahrzeuge selbst mit Sensoren ausgestattet werden. Beispielsweise sei das Floating-Car-Verfahren (FCD) genannt. Bei diesem interaktiven Verkehrsinformationssystem sendet jedes beteiligte Fahrzeug Daten über Standort, Geschwindigkeit und Straßenverhältnisse an eine zentrale Rechnereinheit. Aus diesen Daten wird ein aktuelles Bild der Verkehrslage in jeder Region erstellt und zur Information für jedes Fahrzeug ausgestrahlt.

Die Verbindung zwischen dem Navigationssystem im Fahrzeug und der zentralen Rechnereinheit, die Informationen über die aktuelle Verkehrssituation liefert, wird üblicherweise über ein Mobilfunknetz hergestellt.

Aufgabe der vorliegenden Erfindung ist es, ein kostengünstiges Verfahren zum Navigieren und ein flexibles, kostengünstiges Navigationssystem bereit zu stellen.

Gelöst wird diese Aufgabe erfindungsgemäß durch ein Verfahren zum Navigieren mit den Merkmalen des Auspruchs 1.

Die Liste mit Reisezielen ist entweder im Navigationsendgerät selbst oder in dem zentralen Rechner gespeichert. Das Reiseziel kann dabei unter Angabe eines Ortsnamens, einer Straße und gegebenenfalls einer Hausnummer ausgewählt werden. Dadurch, dass das Reiseziel an einen zentralen Rechner übermittelt wird und die Reiseroute durch den zentralen Rechner berechnet wird, kann das Navigationsendgerät relativ kostengünstig hergestellt werden, da keine Reiserouten im Navigationsendgerät gespeichert werden müssen. Außerdem werden keine besonders hohen Anforderungen an die Rechenleistung des Navigationsendgeräts gestellt. Ein weiterer Vorteil liegt darin, dass nur der zentrale Rechner mit neueren Routendaten aktualisiert werden muss und eine Aktualisierung des Endgeräts nicht notwendig ist. Insbesondere bei häufiger Aktualisierung der Daten des zentralen Rechners kann die aktuelle Verkehrssituation mit in die Routenberechnung einfließen. Diese Flexibilität ist mit herkömmlichem Verfahren zum Navigieren kaum möglich. Es ist auch denkbar, dass mehrere Routen berechnet werden, von denen der Benutzer eine auswählen kann.

Bei einer Verfahrensvariante wird die Reiseroute unter Berücksichtigung von vom Benutzer in das Navigationsendgerät eingegebenen Bedingungen berechnet. Diese Möglichkeit erlaubt es dem Benutzer, seine Reiseroute individuell zu gestalten. So kann er dem zentralen Rechner für die Reiseroutenberechnung z.B. vorgeben, dass keine Autobahnen befahren werden sollen, oder dass eine möglichst kraftstoffsparende Reiseroute ausgewählt werden soll.

Bei einer bevorzugten Verfahrensvariante wird die Position des Navigationsendgeräts bestimmt. Durch diese Maßnahme kann eine Überwachung des Fortschritts der Reise erfolgen und die Reiseroute eventuell während der Reise an die aktuelle Verkehrssituation angepasst werden. Die Positionsermittlung erfolgt vorzugsweise über einen GPS-Empfänger. Allerdings kann erfindungsgemäß auch ein anderes Navigationssystem, das Signale auswertet, die von Satelliten ausgestrahlt werden (Satellitennavigationsystem), zum Einsatz kommen. Ebenso könnten bereits bekannte Verfahren zum Einsatz kommen, mit denen Mobilfunknetze eigenständig in der Lage sind, die Position eines Mobilfunk-Endgerätes zu bestimmen. Erfolgt die Positionsbestimmung nicht durch das Navigationsendgerät selbst, sondern durch das Mobilfunknetz, müssen die Positionsdaten in gewissen Abständen an das Navigationsendgerät übermittelt werden.

Besonders vorteilhaft ist es, wenn die berechnete Route in Steckenabschnitte unterteilt wird und für jeden Streckenabschnitt die Durchschnittsreisegeschwindigkeit ermittelt wird. Diese Informationen können in die Routenberechnung für andere Nutzer des Verfahrens eingehen.

Wenn dem Benutzer von dem Navigationsendgerät Ansagen gemacht werden, kann der Fahrer sich auf die Straße konzentrieren und wird nicht durch eine visuelle Anzeige abgelenkt. Die Ansagen und die Position, an der die betreffende Ansage erfolgt, werden von dem zentralen Rechner an das Navigationsendgerät übermittelt.

Bei einer besonders bevorzugten Verfahrensvariante wird bei Erreichen einer bestimmten Ansage oder Routenposition eine Verbindung zwischen Navigationsendgerät und zentralem Rechner hergestellt und werden Ansagetexte und Positionsmarken von dem zentralen Rechner an das Navigationsendgerät übermittelt. Dabei kann vorgesehen sein, dass der zentrale Rechner aufgrund der Position des Navigationsendgeräts erkennt, dass neue Ansagetexte an das Navigationsendgerät übermittelt werden müssen, und diese automatisch übermittelt. Alternativ kann vorgesehen sein, dass von dem Navigationsendgerät Ansagetexte und Positionsmarken von dem zentralen Rechner angefordert werden, die daraufhin übermittelt werden.

Ist der Ansagespeicher des Navigationsgerätes gefüllt, nimmt es keine weiteren Ansagen von dem zentralen Rechner mehr entgegen. Im Laufe der Fahrt kontaktiert das Navigationsendgerät, nachdem mehrere Ansagen erfolgt sind und diese gelöscht wurden, erneut den zentralen Rechner. Dabei meldet das Navigationsendgerät sich mit seiner Identität an und fordert weitere Ansagetexte und zugehörige Positionsmarken an, d.h. bestimmte Stellen der Route, an denen eine Ansage erfolgen soll. Die Ansagetexte und zugehörigen Positionsmarken werden im Gerät gespeichert.

Bei einer Ausgestaltung der Verfahrensvariante wird während einer Verbindung des Navigationsendgeräts mit dem zentralen Rechner gleichzeitig die Durchschnittsreisegeschwindigkeit für einen Streckenabschnitt an den zentralen Rechner übermittelt. Der zentrale Rechner speichert diese Daten, die von Navigationsendgeräten mehrerer Benutzer übermittelt werden, und ermittelt daraus laufend die durchschnittlich gefahrene Geschwindigkeit auf allen Streckenabschnitten des gesamten Straßennetzes. Diese Informationen können somit in die Routenberechnung für andere Nutzer von Navigationsendgeräten eingehen.

Erfolgt die Kommunikation zwischen Navigationsendgerät und zentralem Rechner paketweise, dann ist eine besonders sichere und schnelle Übermittlung der einzelnen Informationen sichergestellt. Moderne Mobilfunknetze wie GPRS und UMTS können dabei zum Einsatz kommen.

Eine besonders vorteilhafte Verfahrensvariante zeichnet sich dadurch aus, dass mit den von dem Navigationsendgerät übermittelten Informationen Reiserouten für andere Benutzer berechnet werden und/oder Statistiken erstellt werden.

In einem weiteren Aspekt wird die Aufgabe erfindungsgemäß durch ein Navigationssystem mit den Merkmalen des Anspruchs 6 gelöst.

Ein Navigationssystem mit einem solchen Navigationsendgerät ist besonders kostengünstig, da im Navigationsendgerät keine Daten über das Verkehrsnetz (Straßenkarten) gespeichert werden müssen. Deshalb benötigt das Navigationsendgerät kein Lesegerät für einen Datenträger, welcher diese Informationen beinhaltet. Dies ermöglicht eine platz- und kostensparende Bauweise im Vergleich zu herkömmlichen Navigationssystemen bzw. Navigationsendgeräten. Das Navigationsendgerät verfügt über einen Ansagespeicher, in dem Ansagetexte für bestimmte Routenabschnitte gespeichert werden. Ist das Ende eines Streckenabschnittes erreicht, erfolgt durch das Navigationsendgerät automatisch eine Ansage mit Anweisungen an den Benutzer. Hierbei erfolgt lediglich eine akustische Ausgabe der betreffenden Ansage aus dem Ansagespeicher. Eine Verbindung zum zentralen Rechner ist hierzu nicht notwendig. Da der Benutzer ausschließlich über die Ansagetexte geleitet wird, kann eine kleine, preiswerte Anzeigeeinheit zum Einsatz kommen. Insbesondere kann eine in WAP-fähigen Handies übliche Anzeigeeinheit zum Einsatz kommen. Die Anzeigeeinheit wird hauptsächlich dafür benötigt, das Reiseziel auszuwählen. Ein wesentlicher Unterschied zu herkömmlichen Navigationssystemen besteht darin, dass der zentrale Rechner Informationen über die aktuelle Verkehrssituation ausschließlich von den Navigationsendgeräten bezieht. Die extrem hohen Kosten für die Errichtung und die Unterhaltung eines flächendeckenden Netzes von Sensoren an Straßen und Verkehrsknotenpunkten entfällt somit vollständig. Alle Navigationsendgeräte stellen dem Navigationssystem Informationen über die aktuelle Verkehrssituation zur Verfügung. Diese Informationen beziehen sich auf das gesamte Streckennetz. Sie schließen also auch Nebenstrecken mit ein. Die Mittel zur Positionsbestimmung können beispielsweise als am Navigationsendgerät vorgesehener GPS-Empfänger ausgebildet sein. Alternativ kann die Position über Mobilfunknetze bestimmt werden, insbesondere wenn diese als Datenübertragungsmittel verwendet werden.

Wenn für das Navigationsendgerät ein Einbauset zum Einbau in ein Fahrzeug vorgesehen ist, so können Fahrzeuge besonders einfach und kostengünstig nachgerüstet werden. Das Navigationsendgerät ist mobil und kann auch in mehreren unterschiedlichen Fahrzeugen benutzt werden. Die Nachrüstung mit einem derartigen Navigationssystem ist problemlos möglich, da keine Umbauten am Fahrzeug notwendig werden.

Bei einer bevorzugten Ausführungsform ist als Navigationsendgerät ein Mobiltelefon vorgesehen. Zusätzlich zur Navigationsfunktion kann das Navigationsendgerät somit sowohl außerhalb als auch im Fahrzeug als normales Mobilfunktelefon genutzt werden.

Bei einer Weiterbildung kann für das Mobiltelefon eine Freisprecheinrichtung vorgesehen sein. Durch die Freisprecheinrichtung wird es dem Benutzer ermöglicht, während des Fahrens gefahrlos zu telefonieren und das Navigationsendgerät in doppelter Funktion, zum einen zum Navigieren und zum anderen zum Telefonieren zu benutzen.

Wenn für das Navigationsendgerät eine Speichereinheit zur Speicherung einer Software zur Sprachsynthese vorgesehen ist, kann der benötigte Ansagespeicher klein und kostengünstig realisiert werden.

Als Mittel zur Datenübertragung kann ein Mobilfunknetz und/oder ein Gateway zum Internet und/oder das Internet vorgesehen sein. Zur Kommunikation zwischen Navigationsendgerät und zentralem Rechner kann somit auf bereits.existierende Kommunikationssysteme zurückgegriffen werden, was den Aufbau eines erfindungsgemäßen Navigationssystems besonders kostengünstig macht. Durch die Nutzung des Internets ist es auch denkbar, ein System aufzubauen, in dem sich Interessenten vor Antritt der Fahrt, z.B. mittels PC und Internetbrowser, über die aktuelle Verkehrssituation informieren können.

Bei einer bevorzugten Ausgestaltung ist als zentraler Rechner ein Server vorgesehen, in dem eine Liste mit Ortsangaben gespeichert ist. Wenn in dem Server eine Liste mit Ortsangaben gespeichert ist, dann muss diese Liste nicht im Navigationsendgerät abgespeichert werden, so dass das Navigationsendgerät noch kostengünstiger hergestellt werden kann. Die Daten in einem zentralen Server können ständig aktualisiert werden, so dass alle Nutzer eines Navigationsendgerätes ständig Zugriff auf aktuelle Daten und Informationen haben. Im Server können statistische Informationen über das Fahrverhalten sowie die Nutzung des Verkehrsnetzes gesammelt und ausgewertet werden. Diese Informationen können von z.B. Verkehrsplanern für die Planung optimaler Standorte für Raststätten und weitere Dienstleistungen ausgewertet werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die Erfindung ist in der Zeichnung dargestellt und wird anhand eines Ausführungsbeispiels naher erläutert. Es zeigt:
- **Fig. 1**: eine schematische Darstellung eines erfindungsgemäßen Navigationssystems; und
- **Fig. 2**: eine stark schematisierte Darstellung eines Navigationsendgerätes.

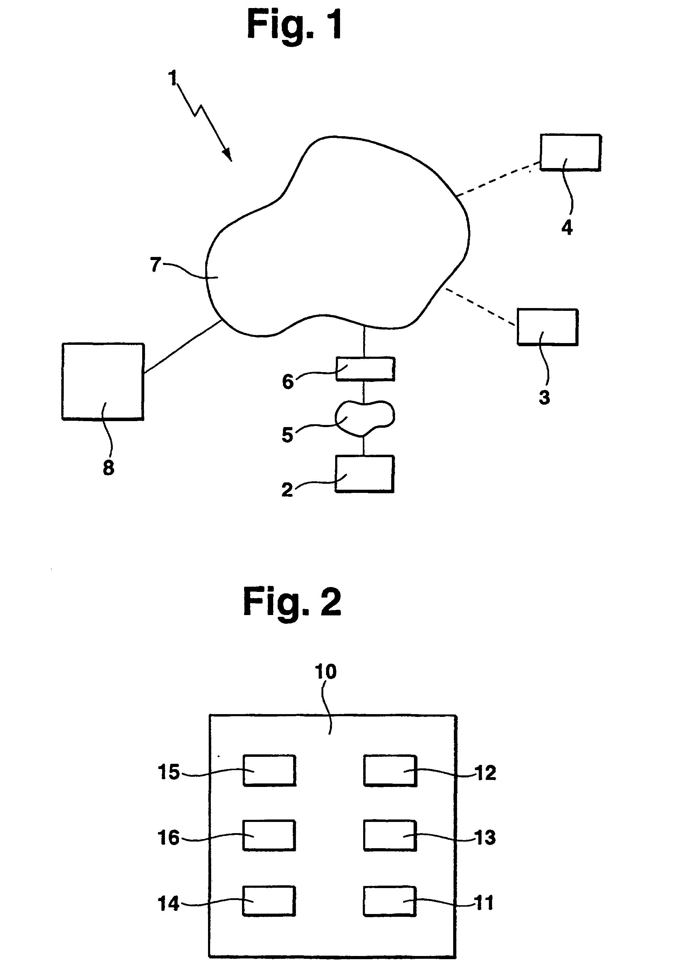

**Fig. 1** zeigt die schematische Darstellung eines Navigationssystems **1.** Mehrere Navigationsendgeräte **2** bis **4** stehen über ein Mobilfunknetz **5** und ein Gateway **6** zum Internet **7** mit einem als Server ausgebildeten zentralen Rechner **8** in Verbindung. Über ein Navigationsendgerät wählt der Nutzer aus einer Liste ein Reiseziel aus. Die Liste mit Reisezielen kann entweder in einem Navigationsendgerät 2 bis 4 oder in dem zentralen Rechner 8 gespeichert sein.

In der **Fig. 2** ist ein Navigationsendgerät schematisch dargestellt. Das Navigationsendgerät **10** umfasst eine Anzeigevorrichtung **11**, über die ein Reiseziel mittels einer Touchscreen oder einer nicht gezeigten Bedienvorrichtung ausgewählt werden kann. Wurde eine Reiseroute ausgewählt, dann erfolgt eine Übermittlung von Ansagetexten für bestimmte Streckenabschnitte von dem zentralen Rechner 8 zu einem Ansagespeicher **12**. Die im Ansagespeicher 12 gespeicherten Ansagen werden über eine Sprachsynthesesoftware **13** in Sprache umgewandelt. Die aktuelle Position des Navigationsendgerätes 10 wird durch einen GPS-Empfänger **14** ermittelt. Durch ein Mobilfunkteil **15** kann mit dem Navigationsendgerät 10 auch telefoniert werden. Während des Fahrens kann über eine Freisprecheinrichtung **16** telefoniert werden.

Die Funktionsweise des erfindungsgemäßen Navigationssystems wird anhand eines Beispiels näher erläutert. Ein Benutzer spezifiziert über die Anzeigeeinrichtung 11 des Navigationsendgerätes 2 bis 4, 10 sein Reiseziel. Dabei wählt er einen Ortsnamen, eine Straße und gegebenenfalls eine Hausnummer aus einer Liste aus. Diese Liste ist entweder im Navigationsendgerät 2 bis 4, 10 oder in dem zentralen Rechner 8 gespeichert. Das Navigationsendgerät 2 bis 4, 10 übermittelt das gewünschte Reiseziel und den aktuellen Standort an den zentralen Rechner 8. Der aktuelle Standort wird durch den GPS-Empfänger 14 ermittelt.

Der zentrale Rechner 8 berechnet eine oder mehrere Route(n) und die voraussichtlich benötigte Reisezeit. Bei der Berechnung der Route und der Reisezeit verwendet der zentrale Rechner 8 die gespeicherten Daten über das Verkehrsnetz und Informationen über die aktuelle Verkehrssituation, die der zentrale Rechner 8 von anderen Navigationsendgeräten 2 bis 4, 10 bereits bekommen hat.

Route und Reisezeit werden als Ansage an das Navigationsendgerät 2 bis 4, 10 übermittelt und dort im Ansagespeicher 12 gespeichert. Die Ansagen können vom Benutzer abgehört werden. Bei Ermittlung mehrerer gleichwertiger Routen kann der Benutzer eine der Routen auswählen. Ebenso kann er vor der Berechnung einer Route Zusatzangaben machen, z.B. dass Autobahnen vermieden werden sollen.

Die berechnete Route wird von dem zentralen Rechner 8 in Streckenabschnitte unterteilt. Am Ende eines Streckenabschnitts muss der Benutzer Informationen über den weiteren Verlauf der Strecke erhalten. Die Information des Benutzers erfolgt über Ansagen, die im Ansagespeicher 12 abgelegt sind und mittels der Sprachsynthesesoftware 13 aufgegeben werden. Diese Ansagen und die Streckenposition, an der die betreffende Ansage erfolgt, werden von dem zentralen Rechner 8 an das Navigationsendgerät 2 bis 4, 10 übermittelt. Ist der Ansagespeicher 12 des Navigationsendgerätes 2 bis 4, 10 gefüllt, nimmt das Navigationsendgerät 2 bis 4, 10 keine weiteren Ansagen von dem zentralen Rechner 8 mehr entgegen. Eine Verbindung zwischen Navigationsendgerät 2 bis 4, 10 und dem zentralen Rechner 8 wird aufgebaut, wenn mehrere Ansagen erfolgt sind und diese gelöscht wurden. Dabei werden weitere Ansagetexte und zugehörige Positionsmarken für die folgenden Streckenabschnitte angefordert und im Ansagespeicher 12 gespeichert.

Die aktuelle Position des Navigationsendgerätes 2 bis 4, 10 wird in kurzen Abständen mittels des GPS-Empfängers 14 ermittelt. Trifft eine ermittelte Position mit einer Positionsmarke zusammen, dann erfolgt automatisch die für diese Positionsmarke im Ansagespeicher 12 abgelegte Ansage. Hierbei erfolgt lediglich eine akustische Ausgabe der betreffenden Ansage aus dem Ansagespeicher 12. Eine Verbindung zum zentralen Rechner 8 ist hierzu nicht notwendig.

Für jeden absolvierten Streckenabschnitt ermittelt das Navigationsendgerät 2 bis 4, 10 die gefahrene Durchschnittsgeschwindigkeit aus der verstrichenen Zeit und der zurückgelegten Entfernung. In gewissen Zeitabständen bzw. bei Erreichen bestimmter Streckenpunkte werden vom Navigationsendgerät 2 bis 4, 10 erneut Ansagen und zugehörige Positionsmarken von dem zentralen Rechner 8 abgefragt. Bei Bestehen der benötigten Verbindung werden gleichzeitig die ermittelten Durchschnittsgeschwindigkeiten für die absolvierten Streckenabschnitte zum zentralen Rechner 8 übertragen. Der zentrale Rechner 8 speichert diese Daten und ermittelt daraus laufend die durchschnittlich gefahrene Geschwindigkeit auf allen Streckenabschnitten des gesamten Straßennetzes.

## Patentansprüche

1. Verfahren zum Navigieren mit Hilfe eines benutzerseitigen Navigationsendgeräts, insbesondere von Fahrzeugen, in denen ein solches Navigationsendgerät angeordnet ist, mit den folgenden Verfahrensschritten:
a. Auswahl eines Reiseziels aus einer Liste über das Navigationsendgerät (2-4, 10);
b. Übermittlung des ausgewählten Reiseziels und des aktuellen Standorts eines Fahrzeugs an einen entfernt gelegenen zentralen Rechner (8);
c. Berechnung einer oder mehrerer Reiseroute(n) und/oder der entsprechenden Reisezeit von aktuellen Standort des Fahrzeugs zum Reisezeil;
d. Übermittlung der Reiseroute und/oder der Reisezeit von dem zentralen Rechner (8) an das Navigationsendgerät (2-4, 10); und
e. Ausgabe von Ansagen von dem Navigatiönsendgerät (2-4, 10) an den Benutzer die Informationen über die berechnete Reiseroute(n) und/oder die entsprechende Reisezeit enthalten, **dadurch gekennzeichnet, dass** die Ansagen und die Position, an der die betreffende Ansage erfolgt, von dem zentralen Rechner (8) an das Navigationsendgerät (2-4, 10) übermittelt werden und dort gespeichert werden.

2. Verfahren nach Anspruch 1, **dadurch gekennzeichnet, dass** die Reiseroute unter Berücksichtigung von vom Benutzer in das Navigationsendgerät (2-4, 10) eingegebenen Bedingungen berechnet wird.

3. Verfahren nach einem der vorhergehenden Ansprüche, **dadurch gekennzeichnet, dass** die Position des Navigationsendgeräts (2-4, 10) bestimmt wird und/oder die berechnete Route in Streckenabschnitte unterteilt wird und für jeden Streckenabschnitt die Durchschnittsreisegeschwindigkeit ermittelt wird.

4. Verfahren nach einem der vorhergehenden Ansprüche, **dadurch gekennzeichnet, dass** bei Erreichen einer bestimmten Ansage oder Routenposition eine Verbindung zwischen Navigationsendgerät (2-4, 10) und zentralem Rechner (8) hergestellt wird und Ansagetexte und Positionsmarker von dem zentralen Rechner (8) an das Navigationsendgerät (2-4, 10) übermittelt werden.

5. Verfahren nach Anspruch 4, **dadurch gekennzeichnet, dass** während einer Verbindung des Navigationsendgeräts (2-4, 10) mit dem zentralen Rechner (8) gleichzeitig die Durchschnittsreisegeschwindigkeit für einen Streckenabschnitt an den zentralen Rechner (8) übermittelt wird und/oder die Kommunikation zwischen Navigationsendgerät (2-4, 10) und zentralem Rechner (8) paketweise erfolgt und/oder mit den von dem Navigationsendgerät (2-4, 10) übermittelten Informationen Reiserouten für andere Benutzer berechnet werden und/oder Statistiken erstellt werden.

6. Navigationssystem (1), insbesondere für Fahrzeuge, mit Mitteln zur Positionsbestimmung, wobei ein zentraler Rechner (8) zumindest zeitweise über Datenübertragungsmittel mit einem Navigationsendgerät (2-4, 10) in Verbindung steht, das eine Bedienvorrichtung, eine Anzeigevorrichtung (11), einen Ansagespeicher (12) für von dem zentralen Rechner (8) übermittelte Ansagen und ein Sende-/ Empfangsgerät (15) aufweist **dadurch gekennzeichnet, dass** die Ansagen und die position, an der die Ansage erfolgt, von dem zentralen Rechner (8) an das Navigationsendgerät (2-4, 10) übermittelt und dort gespeichert werden.

7. Navigationssystem nach Anspruch 6, **dadurch gekennzeichnet, dass** als Navigationsendgerät (2-4, 10) ein Mobiltelefon vorgesehen ist und vorzugsweise für das Mobiltelefon eine Freisprecheinrichtung (16) vorgesehen ist.

8. Navigationssystem nach einem der Ansprüche 6 oder 7, **dadurch gekennzeichnet, dass** für das Navigationsendgerät (2-4, 10) eine Speichereinheit zur Speicherung einer Software (13) zur Sprachsynthese vorgesehen ist.

9. Navigationssystem nach einem der Ansprüche 6 bis 8, **dadurch gekennzeichnet, dass** als Mittel zur Datenübertragung ein Mobilfunknetz (5) und/oder ein Gateway (6) zum Internet (7) und/oder das Internet (7) vorgesehen ist.

10. Navigationssystem nach einem der Ansprüche 6 bis 9, **dadurch gekennzeichnet, dass** als zentraler Rechner (8) ein Server vorgesehen ist, in dem eine Liste mit Ortsangaben gespeichert ist.

## Claims

1. Method of navigating using a user-side navigation terminal, particularly for vehicles in which such a navigation terminal is arranged, with the following method steps:
a. selection of a journey destination from a list via the navigation terminal (2-4, 10);
b. transmission of the selected journey destination and current location of a vehicle to a remote central computer (8);
c. computation of one or more journey routes and/or the corresponding journey time from the current location of the vehicle to the journey destination;
d. transmission of the journey route and/or journey time by the central computer (8) to the navigation terminal (2-4, 10); and
e. output of announcements from the navigation terminal (2-4, 10) to the user, including information about the computed journey route(s) and/or the corresponding journey time, **characterized in that** the announcements and the position at which the relevant announcement takes place are transmitted by the central computer (8) to the navigation terminal (2-4, 10) and stored there.

2. Method according to Claim 1, **characterized in that** the journey route is computed taking account of the conditions which the user enters into the navigation terminal (2-4, 10).

3. Method according to one of the preceding claims, **characterized in that** the position of the navigation terminal (2-4, 10) is determined, and/or the computed route is divided into route sections, and for each route section the average journey speed is determined.

4. Method according to one of the preceding claims, **characterized in that** when a specified announcement or route position is reached, a link between navigation terminal (2-4, 10) and central computer (8) is set up, and announcement texts and position markers are transmitted by the central computer (8) to the navigation terminal (2-4, 10).

5. Method according to Claim 4, **characterized in that** during a link of the navigation terminal (2-4, 10) to the central computer (8), the average journey speed for a route section is transmitted simultaneously to the central computer (8), and/or communication between navigation terminal (2-4, 10) and central computer (8) takes place in packets, and/or journey routes for other users are computed, and/or statistics are produced, with the information which is transmitted by the navigation terminal (2-4, 10).

6. Navigation system (1), particularly for vehicles, with means for determining position, a central computer (8) being linked at least some of the time via data transmission means to a navigation terminal (2-4, 10), which has an operating device, a display device (11), an announcement memory (12) for announcement texts which are transmitted by the central computer (8), and a transmission/reception device (15), **characterized in that** the announcements and the position at which the announcement takes place are transmitted by the central computer (8) to the navigation terminal (2-4, 10) and stored there.

7. Navigation system according to Claim 6, **characterized in that** a mobile telephone is provided as the navigation terminal (2-4, 10), and preferably a hands-free facility (16) is provided for the mobile telephone.

8. Navigation system according to one of Claims 6 or 7, **characterized in that** a memory unit for storing software (13) for speech synthesis is provided for the navigation terminal (2-4, 10).

9. Navigation system according to one of Claims 6 to 8, **characterized in that** as means for data transmission, a mobile communication network (5) and/or a gateway (6) to the Internet (7) and/or the Internet (7) is provided.

10. Navigation system according to one of Claims 6 to 9, **characterized in that** a server, in which a list with place data is stored, is provided as the central computer (8).

## Revendications

1. Procédé de navigation à l'aide d'un terminal de navigation du côté de l'utilisateur, notamment de véhicules, dans lesquels est disposé un tel terminal de navigation, selon les étapes de procédé suivantes :
a) sélection d'une destination dans une liste à l'aide du terminal de navigation (2-4, 10) ;
b) transmission de la destination sélectionnée et de la position actuelle d'un véhicule à un ordinateur (8) central à distance ;
c) calcul d'un ou de plusieurs itinéraire(s) et/ou du temps de voyage correspondant de la position actuelle du véhicule à la destination ;
d) transmission de l'itinéraire et/ou du temps de voyage depuis l'ordinateur central (8) au terminal de navigation (2-4, 10) ; et
e) émission d'annonces depuis le terminal de navigation (2-4, 10) vers l'utilisateur qui contiennent les informations sur le/les itinéraire(s) calculé(s) et/ou le temps de voyage correspondant, **caractérisé en ce que** les annonces et la position à laquelle a lieu l'annonce concernée sont transmises par l'ordinateur central (8) au terminal de navigation (2-4, 10) et y sont mémorisées.

2. Procédé selon la revendication 1, **caractérisé en ce que** l'itinéraire est calculé en tenant compte des conditions indiquées par l'utilisateur dans le terminal de navigation (2-4, 10).

3. Procédé selon l'une quelconque des revendications précédentes, **caractérisé en ce que** la position du terminal de navigation (2-4, 10) est déterminée et/ou l'itinéraire calculé est séparé en sections de parcours et la vitesse moyenne du voyage est déterminée pour chaque section de parcours.

4. Procédé selon l'une quelconque des revendications précédentes, **caractérisé en ce que**, lorsqu'on atteint une annonce définie ou une position d'itinéraire, une liaison est établie entre le terminal de navigation (2-4, 10) et l'ordinateur central (8) et le texte d'annonce et le marqueur de position sont transmis de l'ordinateur central (8) au terminal de navigation (2-4, 10).

5. Procédé selon la revendication 4, **caractérisé en ce que** lors d'une liaison du terminal de navigation (2-4, 10) avec l'ordinateur central (8), la vitesse moyenne de voyage d'une section de parcours est simultanément transmise à l'ordinateur central (8) et/ou que la communication entre le terminal de navigation (2-4, 10) et l'ordinateur central (8) a lieu par paquets et/ou qu'avec les informations transmises par le terminal de navigation (2-4, 10) des itinéraires sont calculés pour d'autres utilisateurs et/ou que des statistiques sont établies.

6. Système de navigation (1), notamment de véhicules, avec des moyens pour déterminer la position, un ordinateur central (8) étant en liaison au moins périodiquement à l'aide d'un moyen de transmission de données avec un terminal de navigation (2-4, 10) qui présente un dispositif de service et un dispositif d'affichage (11), une mémoire d'annonce (12) pour les annonces transmises par l'ordinateur central (8) et un appareil émetteur/récepteur (15), **caractérisé en ce que** les annonces et la position à laquelle a lieu l'annonce sont transmises par l'ordinateur central (8) au terminal de navigation (2-4, 10) et y sont mémorisées.

7. Système de navigation selon la revendication 6, **caractérisé en ce qu'**un téléphone mobile est prévu comme terminal de navigation (2-4, 10) et que de préférence un dispositif de conversation mains libres (16) est prévu pour le téléphone mobile.

8. Système de navigation selon l'une quelconque des revendications 6 ou 7, **caractérisé en ce qu'**une unité mémoire est prévue pour le terminal de navigation (2-4, 10) pour stocker un logiciel (13) de synthèse vocale.

9. Système de navigation selon l'une quelconque des revendications 6 à 8, **caractérisé en ce qu'**un réseau de téléphonie mobile (5) et/ou une passerelle (6) vers Internet (7) et/ou l'Internet (7) est prévu pour le terminal de navigation (2-4, 10).

10. Système de navigation selon l'une quelconque des revendications 6 à 9, **caractérisé en ce qu'**un serveur est prévu comme ordinateur central (8), dans lequel est stocké une liste avec des indications de lieu.
